# EUROPEAN PATENT SPECIFICATION

(11) **EP 0 626 814 B1**
(45) Date of publication and mention of the grant of the patent: **30.07.1997**
(21) Application number: 93904208.1
(22) Date of filing: 16.02.1993
(51) Int. Cl.: A43B 7/36, A43B 1/00, C08L 65/00

(54) **ANTISTATIC FOOTWEAR OF INTRINSICALLY CONDUCTIVE POLYMERS OR BLENDS THEREOF**
ANTISTATISCHES SCHUHWERK AUS EIGENLEITFÄHIGEN POLYMEREN ODER DARAUS HERGESTELLTEN MISCHUNGEN
CHAUSSURE ANTISTATIQUE COMPOSEE DE POLYMERES INTRINSEQUEMENT CONDUCTEURS OU DE LEURS MELANGES

(30) Priority: 17.02.1992 AU PL0926/92; 11.05.1992 AU PL2388/92
(43) Date of publication of application: 07.12.1994
(73) Proprietor: FOOTWEAR INNOVATIONS LIMITED, Wan Chai (HK)
(72) Inventor: DALTON, John Arthur, Tsim Sha Tsui, Kowloon (HK)
(74) Representative: Findlay, Alice Rosemary
(86) International application number: GB9300324
(87) International publication number: WO9315624

(56) References cited:
- WO-A-86/05662
- WO-A-89/01255
- DE-A- 2 649 924
- DATABASE WPIL, Week 8808, Derwent Publications Ltd., London, GB; AN 88-053885 & JP A 63 010 685 (KOKOKU CHEM IND KK) 18 January 1988
- DATABASE WPIL, Week 9015, Derwent Publications Ltd., London, GB; AN 90-110201 & JP A 2 059 044 (BRIDGESTONE TIRE KK) 28 February 1990
- PATENT ABSTRACTS OF JAPAN, vol. 15, no. 193 (C-832)17 May 1991 & JP A 30 49 701 (THE FURUKAWA ELECTRIC CO LTD) 4 March 1991

## Description

This invention relates to the earthing of electrostatic charges on a person in a safe and convenient way by means of footwear. It is an accepted scientific fact that friction caused by movement between insulating materials will result in the generation of electro-static charges. These charges may cause a voltage build-up of many thousands of volts. Because of their inherent insulating properties, the increasing use of synthetic fibres and materials is presenting increasing danger risks and discomfort problems due to the build-up of electro-static voltages.

It has been established that static electricity can be reduced by applying an anti-static finish to materials and by wearing footwear with anti-static soles. It should be noted, however, that anti-static finish on materials is effective when they are new, but its effectiveness will become less after washing and pressing.

One danger associated with static-electricity is that of explosion and fire from ignition of flammable vapour or gas, however, there is also a growing awareness of the personal discomfort problem associated with electro-static voltages.

Simply, every day examples of the discomfort of static "shock" are as follows:
1. Persons can receive a shock when getting out of a motor vehicle by sliding over the plastic seat and earthing themselves on the metal door handle or bodywork of the vehicle.
2. An unexpected static shock is often experienced when touching door handles and lift buttons after walking on synthetic carpets.

Other means of causing a build-up of an electro-static charge on persons are:
1. The wearing and taking off of synthetic clothing.
2. When getting up from a chair which is covered in a plastic or synthetic material.
3. Nurses in hospitals often become "charged" when making beds.

Natural fibres, such as wool, cotton etc cannot become statically "charged" due to their inherent moisture content and make-up, and their continuing ability to both absorb and retain moisture.

Conversely, silk and synthetic fibres are well-known for their ability to generate and accumulate electro-static charges. This is often demonstrated by the "crackling" or "sparkling" that occurs when removing synthetic clothing.

This increasing use of synthetic fibres and materials, such as nylon, orlon, polyester, etc. and plastics generally, in clothing, carpets furnishings, upholstery and soles on footwear, is presenting increasing discomfort and safety risks to the community and industry around the world.

Static electricity can also be generated by equipment, solid objects, liquids, dusts and gases.

Depending on the situation, static electricity can be uncomfortable, inconvenient, harmful and dangerous.

One of the many uncomfortable side effects produced by the build-up of electro-static charges in a person is when the person experiences discomfort due to an unexpected static "shock". The use of insulating rubber and synthetic soles on footwear, instead of normal leather soles which is a natural material and has anti-static properties, has produced a high incidence of "hot foot" discomfort and other side effects as well as static "shock" to the wearer of shoes with insulating soles of "synthetic" material. This is caused by the lack of anti-static properties in rubber and synthetic footwear soles, which will not allow the charge "build-up" on a person to be "earthed" through an insulating rubber or synthetic sole.

An electrical path through which static from the body may pass can consist of various forms of conductive materials, which are now commercially available, such as fibrous type insoles of a type sold under the trade names of TEXON and BONTEX and others. Moisture absorbing materials make excellent static dissipating conductors.

Static electricity is also inconvenient, and a good example of this problem is articles sticking to each other or neighbouring objects and also the attraction of dust and foreign materials.

It is well-known that synthetic materials will soil more quickly than materials of natural fibres. This is because the synthetic fibres become statically "charged" and therefore they attract dust and dirt.

Static electricity is also a health hazard, for instance a person who is statically "charged" is more easily able to attract air born dusts, germs and bacteria, such as may be the cause of colds, flu and hay fever and many other respiratory tract ailments.

Static electricity is also a danger hazard, for instance operators and workers in a wide range of industrial situations who become statically "charged", present a very dangerous problem. In this case, a "discharge" of a static "spark" from a person in industrial areas containing flammable materials, can cause an explosion. Such areas, include Hospital Operating Theatres where flammable anaesthetics are still used, Chemical Laboratories, Petroleum and Gas Plants, Grain Storage Elevators, Initiating Explosives sections, Dry Cleaning plants, Mining, etc.

Considerable danger exists in certain areas within the aircraft industry, particularly during the refuelling operation and an explosion can occur if a static "discharge" takes place in the presence of flammable vapours during uncoupling of fuel lines.

It is well-known that normal methods used for earthing of persons by means of footwear include:
1. Use of black carbon composites in the shoe soles which provide a conductive path to earth.
2. Conductive garters which are strapped in contact with the skin of the wearers leg and which makes electrical contact with a sufficiently large area on the sole of the footwear.
3. Incorporation of a conductive carbon plug by means of moulding in the soles of a normally insulating shoe.
4. Use of copper nails driven through the soles of normally insulating soles of rubber or other synthetic type materials.
5. Wearing of leather soled shoes which do not incorporate rubber solutions for bonding soles to the upper, but utilise stitching as in the case of the Goodyear welt method.

WO-A-89/02155 discloses an intrinsically conductive polymer (ICP) in the form of a dispersible solid of primary particles with a specific surface area according to BET of > 15m²/g and with an average diameter of less than 500nm, in which preferably not more than 20% of aggregates with an average size > 1µm are present in the particle sin range > 500nm. For the manufacture of the polymer the polymerisation is carried out in a solvent in which the appropriate monomer is soluble or colloidally dispersible, but in which the polymer that is formed is insoluble, whereby the temperature of the reaction mixture is not allowed to rise more than 5°C above the starting temperature. WO-A-89/02155 discloses the use of the raw materials as electrical conductors, semi-conductors, protection against static charges, for shielding against electromagnetic waves, for the absorption of microwaves, for the manufacture of capacitors or to replace electrolytes in electrolytic capacitors, for the manufacture of semi-conductor components, as photo-conductors or in photovoltaic energy conversion, in compositions with metals or metalloids or in compositions with various conductive polymers in the exploitation of the thermoelectric effect as a temperature probe or in thermovoltaic energy conversion, as sensors, as indicators, in processes of electrolysis or electrosynthesis as electrocatalytic electrodes, in photoelectric catalysis or synthesis, and photovoltaic effects, in protection against corrosion, as electrodes in re-chargeable batteries, and as UV- and light-stable pigments.

JP-A-63/10685 discloses an electroconductive powder compound consisting of powder whose surface is covered with polypyrrole type compounds, or consisting of powder in which polypyrrole type compounds are partially or entirely impregnated. Synthetic resin powder (e.g. acrylonitrile-styrene copolymer, nylon-6, high density polyethylene, and polymethylmethacrylate), natural polymer powder (e.g. cellulose powder), and inorganic powder (e.g. glass powder) may be used as base powders. Pyrrole type monomer and oxidising polymerisation agent contacting with base powder are polymerized under the existence of dopant to obtain this powder. This powder may be used as a raw material for electroconductive compositions (e.g. rapping material for electric devices, flooring materials, wall materials, and antistatic shoes used in production lines of electronic devices, where electromagnetic shielding, or antistatic properties are required). This powder has an electroconductivity of about 6 x 10⁴ Ω - 5 x 10⁵ Ω. This document discloses the use of ICP in antistatic shoes.

It is an object of the invention to overcome one or more of the abovementioned problems.

In accordance with the invention, there is provided a footwear composed at least partly of intrinsically conductive polymer (ICP) characterized in that the footwear has at least an outersole comprising a blend of polymers composed at least partly of ICP and at least partly of at least one other polymer selected from among the ground consisting of natural rubber, synthetic rubber, and other polymers, said ICP providing an effective path to earth for static build-up in the body of the wearer of the footwear, and in that the ICP is present in the said blend in an amount in the range of 5% to 25%.

Suitably the ICP is also used in the insole and/or throughsole of the footwear.

The human body is a conductor and when insulated from earth it can become electro-statically "charged".

The improved anti-static footwear through the means of the anti-static properties incorporated in the footwear, is scientifically designed in such a way as to provide:
1. The safe dissipation, or "earthing" of electro-static charges in the body; and
2. Protection against electric shock from supply mains, in case the wearer accidentally touches a source of high voltage.

The improved footwear by means of the anti-static properties provided in the normally insulating soles, creates a solution to the above problems.

The improved anti-static footwear invention, through the means of the anti-static properties incorporated in the footwear components is scientifically designed in such a way as to be a significant improvement over prior art. This is because of the nature, or composition of the synthetic, normally insulating materials used in the footwear, particularly in regard to the construction and composition of the synthetic polymers used in the soles of the footwear.

Such anti-static footwear is an effective means of controlling undesirable static electricity.

In particular, such anti-static footwear provides a safe and more effective path to earth for body static through the use of intrinsically conductive polymers - ICPs. Intrinsically conductive polymers do not use conductive compounds, such as carbon, or metallic fillers, such as metal powders, or other such conductive materials, but instead use the conductive properties of ICPs which are inherent in the processed polymers. The process is a relatively simple technique which entails subjecting the polymer to a small positive voltage that "pops" positively charged hydrogen ions off the molecule, leaving negatively charged groups behind. As a result, the polymer becomes electrically conductive and thus provides a conductive path through the polymer for static in the wearers body to pass through the sole of the footwear to earth.

Full details relating to intrinsically conductive polymers are outlined in Modern Plastics International, August 1991 edition and contained in an article headed "Tapping the Power of Intrinsic Conductivity".

Suitably, the ICP is based on polyaniline and in particular the raw material necessary for the manufacture of the blend is polyaniline in powder form.

Other ICPs include polydiphenylamine, polypyrrole, polythioprene, polythiophene, polythienylenevinylene, bithiophene and polycroconaine dosed with iodine.

Further thermoplastic blends and other dispersions are currently being developed.

In spite of their insolubility and infusibility, ICPs are processable. Furthermore, the conductivity of ICPs approach that of copper and other metals, at a fraction of the weight.

These polymer blends are particularly suitable, because they combine the cost effectiveness and utility of plastics with electrical properties approaching those of metals. The polymer is environmentally stable, so it will not lose its properties under typical use conditions.

Suitably the ICP has a conductivity greater than 10⁻⁵ Siemens/cm (S/cm), more preferably a conductivity greater than 10⁻² S/cm, and most preferably a conductivity greater than 1 S/cm.

Anti-static properties provided by the intrinsically conductive polymers may be incorporated in any component of the footwear made of a polymer. It is particularly suitable for use in the shoe soling components and materials, such as used in the insoles, through soles and outersoles. It should be noted that ICP materials may be used in conjunction with any type of other footwear products and components which are moisture absorbing so as to provide an effective path to earth for static build-up in a person's body.

The use of ICPs in footwear components, however, particularly in insole, through sole or outersole construction provides significant improvement over prior art.

Improvements include some very tangible performance benefits, including superior conductive and mechanical properties and improved processing procedures over previously used and known materials. They contain no metal or fibres to breakdown in processing. They are also highly suitable for extrusion, injection, compression and other forms of process moulding.

Normal means of producing shoe sole components, such as by compression moulding, direct injection, unit sole moulding, or sheet moulding and cut methods, or any other kind of construction, may be used.

One improvement by such footwear is that it will control the risk of "cross-infection" and is specially recommended for use in infectious diseases areas.

Another improvement provided by this invention is that unlike the "black art" system used in conductive carbon composite sole systems, the intrinsically conductive polymer does not create marking problems on floors or other surfaces, which is a common fault with black carbon sole materials.

One other aspect of this invention of providing anti-static and conductive properties in footwear by means of ICPs is that by a system of addition or subtraction the resistance values in the shoe materials may be controlled within safe limits. Alternatively, the ICP materials may be in the form of an additive, often referred to as a masterbatch which can be used in association with any rubber, or non-rubber based compounds, such as the popular range of polymers, eg Polyvinyl Chloride (PVC), Polyurethane (PU), ABS, PE, thermoplastic polyester, nylon, EVA, etc, and which would also allow the finished product to obtain resistance values in the approved "safety" range.

Another feature provided by the invention is that "conductive" or anti-static" shoes can be produced in almost any colour without detracting from the performance properties provided by the use of ICP materials.

The conductive properties provided by the invention may be varied according to requirements, however, in the case of safe wearing of the footwear, only conducting properties relating to "anti-static" shoes should be used. For anti-static footwear, electrical resistance in the ICP material should be no greater than 1 x 10 ⁹ ohms and no less than 10 ohms, more preferably be no greater than 1 x 10⁸ ohms and no less than 5 x 10⁴ ohms, and most preferably no greater than 1 x 10⁸ ohms and no less than 1 x 10⁶ ohms (when measured according to British standard BS2050).

It should be understood, however, that resistance values through the ICP material, or an additive thereof, may be varied. Amounts of ICP ranging from 5% to 25% - in blends with PVC, thermoplastic polymer, PU and other polymers, has been found to provide varying degrees of anti-static properties which are quite suitable for use in this invention.

One particular soling material popularly used in the construction of footwear is PVC, and another PU, is also very suitable along with numerous other compounds of polymers, synthetic rubbers, natural rubber and other forms of materials used in footwear construction.

Two ICP materials which may be effectively used in the construction of the "anti-static" or "conductive" footwear invention, are marketed under the trade names VERSICON and INCOBLEND produced by Allied Signal Corp, USA and Zipperling Kessler & Co. (GmbH & Co.), Germany respectively.

Specific details of the ICP material sold under the trade name VERSICON are as follows:
- Chemical Characterization: : Polyaniline (intrinsically conductive polymer)
- Appearance/Form: : dark green powder
- Conductivity (compacted powder): : 2-4 S/cm
- Resistivity (compacted powder): : 0.5-0.25 Ω cm
- Moisture Content: : 3-4 wt/%
- Particle Size Range: : 3 - 100 micron (undispersed)
- Specific Gravity: : 1.36 g/cm³
- Bulk Density: : 230 g/l
- Surface Area (BET): : 5-20 m²/g
- Temperature Limit:
- long term (years) Service: : 100°C
- short term (minutes) Processing: : 240°C
- Solubility: : Insoluble in common solvents such as water, alcohols, ethers, hydrocarbons
- Chemical Nature: : acidic, incompatible with most bases

Specific details of the ICP material sold under the trade name INCOBLEND are as follows:
- Description: : The product is a flexible PVC blend based on an intrinsically conductive polymer (PAni). It offers electrical conductivity greater than 1 S/cm.
- Electrical Properties: : Bulk Conductivity - greater than 1 S/cm (upper limit being 5 S/cm)
- Mechanical Properties: : Tensile, (PST) - greater than 600
Elongation, % - greater than 250
Shore A Hardness - 82
- Processing Guidelines: : Compression Moulding - 150°C
Injection Moulding -
Zones 135°C
Die 150°C
Mould 24°C
Extrusion - 135-150°C

Processes of inducing high levels of conductivity in polyaniline and other polymers to produce ICPs include both photochemical (by electron-beam exposure) and thermal methods. Polyaniline is processed in a solution using organic and aqueous solvents, and the polymer undergoes an insulator-to-conductor transition on doping with reagents such as protonic acids, creating a metallic salt. Exposing this system to E-beam radiation turns polyaniline into a conductor.

## Claims

1. Footwear composed at least partly of intrinsically conductive polymer (ICP) characterized in that the footwear has at least an outersole comprising a blend of polymers composed at least partly of ICP and at least partly of at least one other polymer selected from among the ground consisting of natural rubber, synthetic rubber, and other polymers, said ICP providing an effective path to earth for static build-up in the body of the wearer of the footwear, and in that the ICP is present in the said blend in an amount in the range of 5% to 25%.

2. Footwear as claimed in Claim 1 wherein the ICP is also used in the insole and/or throughsole.

3. Footwear as claimed in Claim 1 or 2 wherein the ICP is based on polyaniline.

4. Footwear as claimed in any of the preceding claims wherein the ICP is based on polydiphenylamine polypyrrole, polythioprene, polythiophene, polythienylenevinylene, bithiophene or polycroconaine.

5. Footwear as claimed in any of the preceding claims wherein the ICP has a conductivity greater than 10⁻⁵ Siemens/cm (S/cm).

6. Footwear as claimed in any of the preceding claims wherein the ICP has a conductivity greater than 10⁻² S/cm.

7. Footwear as claimed in any of the preceding claims wherein the ICP has a conductivity greater than 1 S/cm.

8. Footwear as claimed in any of the preceding claims wherein the ICP is incorporated in each component of the footwear which is made of a polymer.

9. Footwear as claimed in any of the preceding claims wherein the ICP is in the form of an additive used in association with any rubber.

10. Footwear as claimed in any of the preceding claims wherein the ICP is in the form of an additive used in association with a non-rubber based compound.

11. Footwear as claimed in any of the preceding claims wherein said at least one other polymer is selected from the group consisting of natural rubber, synthetic rubber, polyvinyl chloride, polyurethane, acrylonitrile-butadiene-styrene, thermoplastic polyester and nylon.

12. Footwear as claimed in any of the preceding claims wherein the electrical resistance of the ICP is no greater than 1 x 10⁸ ohms.

13. Footwear as claimed in any of the preceding claims wherein the electrical resistance of the ICP is no less than 5 x 10⁴ ohms.

## Patentansprüche

1. Fußbekleidung, die wenigstens teilweise aus eigenleitfähigem Polymer (ICP) besteht, dadurch gekennzeichnet, daß die Fußbekleidung wenigstens eine Außensohle aufweist, die eine Polymermischung umfaßt, welche wenigstens teilweise aus ICP und wenigstens teilweise aus wenigstens einem anderen Polymer, gewählt aus der Grundlage bestehend aus Naturkautschuk, synthetischem Kautschuk und anderen Polymeren, besteht, wobei das ICP für statische Aufladung am Körper des Trägers der Fußbekleidung einen wirksamen Pfad zur Erde bietet, und daß das ICP in der Mischung in einer Menge im Bereich von 5% bis 25% vorhanden ist.

2. Fußbekleidung nach Anspruch 1, wobei das ICP auch in der Innensohle und/oder Zwischensohle verwendet wird.

3. Fußbekleidung nach Anspruch 1 oder 2, wobei das ICP auf Polyanilin basiert.

4. Fußbekleidung nach einem der vorhergehenden Ansprüche, wobei das ICP auf Polydiphenylamin, Polypyrrol, Polythiopren, Polythiophen, Polythienylenvinylen, Bithiophen oder Polykrokonain basiert.

5. Fußbekleidung nach einem der vorhergehenden Ansprüche, wobei das ICP eine Leitfähigkeit von mehr als 10⁻⁵ Siemens/cm (S/cm) aufweist.

6. Fußbekleidung nach einem der vorhergehenden Ansprüche, wobei das ICP eine Leitfähigkeit von mehr als 10⁻² S/cm aufweist.

7. Fußbekleidung nach einem der vorhergehenden Ansprüche, wobei das ICP eine Leitfähigkeit von mehr als 1 S/cm aufweist.

8. Fußbekleidung nach einem der vorhergehenden Ansprüche, wobei das ICP in jeder Komponente der Fußbekleidung enthalten ist, die aus einem Polymer gefertigt ist.

9. Fußbekleidung nach einem der vorhergehenden Ansprüche, wobei das ICP in Form eines Zusatzstoffes vorliegt, der in Verbindung mit jedem Kautschuk verwendet wird.

10. Fußbekleidung nach einem der vorhergehenden Ansprüche, wobei das ICP in Form eines Zusatzstoffes vorliegt, der in Verbindung mit einer nicht auf Kautschuk basierenden Verbindung verwendet wird.

11. Fußbekleidung nach einem der vorhergehenden Ansprüche, wobei das wenigstens eine andere Polymer aus der Gruppe bestehend aus Naturkautschuk, synthetischem Kautschuk, Polyvinylchlorid, Polyurethan, Acrylnitril-Butadien-Styrol, thermoplastischem Polyester und Nylon gewählt ist.

12. Fußbekleidung nach einem der vorhergehenden Ansprüche, wobei der elektrische Widerstand des ICP höchstens 1 x 10⁸ Ohm beträgt.

13. Fußbekleidung nach einem der vorhergehenden Ansprüche, wobei der elektrische Widerstand des ICP mindestens 5 x 10⁴ Ohm beträgt.

## Revendications

1. Chaussure composée, au moins partiellement, de polymère à conduction intrinsèque, caractérisée en ce que la chaussure présente au moins une semelle externe comprenant un mélange de polymères composé, au moins partiellement, de polymère à conduction intrinsèque et, au moins partiellement, d'au moins un autre polymère choisi dans le groupe comprenant le caoutchouc naturel, le caoutchouc synthétique, et d'autres polymères, le polymère à conduction intrinsèque constituant une trajectoire efficace en direction de la terre pour l'accumulation d'une charge électrostatique dans le corps du porteur de la chaussure, et en ce que le polymère à conduction intrinsèque est présent, dans le mélange, dans une quantité située entre 5 % et 25 %.

2. Chaussure selon la revendication 1, dans laquelle le polymère à conduction intrinsèque est également utilisé dans la première et/ou la semelle intermédiaire.

3. Chaussure selon la revendication 1 ou 2, dans laquelle le polymère à conduction intrinsèque est à base de polyaniline.

4. Chaussure selon l'une quelconque des revendications précédentes, dans laquelle le polymère à conduction intrinsèque est à base de polydiphénylamine, de polypyrrole, de polythioprène, de polythiophène, de polythiénylènevinylène, de bithiophène ou de polycroconaine.

5. Chaussure selon l'une quelconque des revendications précédentes, dans laquelle le polymère à conduction intrinsèque présente une conductivité supérieure à 10⁻⁵ Siemens/cm (S/cm).

6. Chaussure selon l'une quelconque des revendications précédentes, dans laquelle le polymère à conduction intrinsèque présente une conductivité supérieure à 10⁻² S/cm.

7. Chaussure selon l'une quelconque des revendications précédentes, dans laquelle le polymère à conduction intrinsèque présente une conductivité supérieure à 1 S/cm.

8. Chaussure selon l'une quelconque des revendications précédentes, dans laquelle le polymère à conduction intrinsèque est incorporé dans chaque composant de la chaussure qui est constitué d'un polymère.

9. Chaussure selon l'une quelconque des revendications précédentes, dans laquelle le polymère à conduction intrinsèque se présente sous la forme d'un additif utilisé en association avec un caoutchouc quelconque.

10. Chaussure selon l'une quelconque des revendications précédentes, dans laquelle le polymère à conduction intrinsèque se présente sous la forme d'un additif utilisé en association avec un composant à base d'un produit non caoutchouteux.

11. Chaussure selon l'une quelconque des revendications précédentes, dans laquelle l'autre polymère, au nombre minimum d'un, est choisi dans le groupe comprenant le caoutchouc naturel, le caoutchouc synthétique, le chlorure de polyvinyle, le polyuréthane, l'acrylonitrile-butadiène-styrène, un polyester thermoplastique et le nylon.

12. Chaussure selon l'une quelconque des revendications précédentes, dans laquelle la résistance électrique du polymère à conduction intrinsèque n'est pas supérieure à 1 x 10⁸ ohms.

13. Chaussure selon l'une quelconque des revendications précédentes, dans laquelle la résistance électrique du polymère à conduction intrinsèque n'est pas inférieure à 5 x 10⁴ ohms.
